# EUROPÄISCHE PATENTSCHRIFT

(11) **EP 1 359 059 B1**
(45) Veröffentlichungstag und Bekanntmachung des Hinweises auf die Patenterteilung: **30.03.2005**
(21) Anmeldenummer: 03007245.8
(22) Anmeldetag: 31.03.2003
(51) Int. Cl.: B60R 21/13

(54) **Überrollschutzsystem für Kraftfahrzeuge mit einer selbsthaltenden Entriegelungseinrichtung**
Rollbar protection system for vehicles with a self retaining unlocking device
Système d'arceau de sécurité pour véhicules avec un dispositif de deverrouillage autobloquant

(30) Priorität: 02.05.2002 DE 10219447
(43) Veröffentlichungstag der Anmeldung: 05.11.2003
(73) Patentinhaber: ISE Innomotive Systems Europe GmbH, 51702 Bergneustadt (DE)
(72) Erfinder: Nass, Michael, 51702 Bergneustadt (DE)
(74) Vertreter: Fuchs Mehler Weiss & Fritzsche

(56) Entgegenhaltungen:
- DE-A- 3 905 470
- DE-A- 10 042 420
- DE-A- 19 712 955
- DE-C- 19 910 424

## Beschreibung

Die Erfindung bezieht sich auf ein Überrollschutzsystem für Kraftfahrzeuge, mit einem Überrollbügel, der in einer fahrzeugfesten Führungseinheit geführt aufgenommen ist, und der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine obere, schützende verriegelte Stellung bringbar ist, und mit einer Verriegelungseinrichtung für Kraftfahrzeuge, mit einem Überrollbügel, der in einer fahrzeugfesten Führungseinheit geführt aufgenommen ist, und der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine obere, schützende verriegelte Stellung bringbar ist, und mit einer Verriegelungseinrichtung, bestehend aus zwei Verriegelungselementen in Form eines Zahnsegmentes und einer mittels mindestens einer Feder vorgespannten Sperrklinke, von denen das eine Verriegelungs-Element fahrzeugfest angeordnet und das andere Verriegelungs-Element mit dem Überrollbügel verbunden ist, wobei der Sperrklinke eine deren entriegelte Stellung selbsthaltende Einrichtung zugeordnet ist, die einmal einen zweiarmigen Umlenkhebel aufweist, der an demselben Träger, an dem die Sperrklinke angelenkt ist, drehbar angelenkt ist, und zum anderen einen nach Art einer Kulissenführung ausgebildeten, einen abgekröpften End-Anschlag besitzenden Fortsatz der Sperrklinke einschließt, der in Wirkverbindung mit einem Hebelarm (Wirk-Hebelarm) des Umlenkhebels steht, derart, daß bei manueller Verschwenkung des Umlenkhebels die Sperrklinke unter Lösen des verriegelnden Wirkeingriffes mit dem Zahnsegment selbsthaltend verschwenkbar ist.

Derartige Überrollschutzsysteme dienen zum Schutz der Insassen in Kraftfahrzeugen ohne schützendes Dach, typischerweise in Cabriolets oder Sportwagen.

Es ist dabei bekannt, einen die gesamte Fahrzeugbreite überspannenden, fest installierten Überrollbügel vorzusehen oder jedem Fahrzeugsitz einen höhenunveränderlich fest installierten Überrollbügel zuzuordnen.

Bei beiden Lösungen wird der erhöhte Luftwiderstand und das Auftreten von Fahrgeräuschen als nachteilig empfunden, abgesehen von der Beeinträchtigung des Fahrzeugaussehens bei Cabriolets.

Am Markt setzen sich daher immer mehr konstruktive Lösungen durch, bei denen der Überrollbügel im Normalzustand eingefahren ist, und im Gefahrenfall, also bei einem drohenden Überschlag, schnell in eine schützende Position ausgefahren wird, um zu verhindern, daß die Fahrzeuginsassen durch das sich überschlagende Fahrzeug erdrückt werden.

Diese Lösungen weisen typischerweise für jeden Sitz einen in einem fahrzeugfesten Kassetten-Gehäuse geführten U-förmigen oder aus einem Profilkörper gebildeten Überrollbügel, auf, der im Normalzustand gegen die Vorspannkraft einer Antriebs-Druckfeder durch eine Haltevorrichtung in einer unteren Ruhelage gehalten wird, und im Überschlagfall sensorgesteuert unter Lösen der Haltevorrichtung, durch die Federkraft in eine obere, schützende Stellung bringbar ist, wobei eine dann in Wirkeingriff tretende Verriegelungseinrichtung ein Eindrücken des Überrollbügels in die Kassette verhindert.

Die Haltevorrichtung besitzt dabei typischerweise ein am Überrollkörper befestigtes Halteglied, das in lösbarer mechanischer Wirkverbindung mit einem Auslöseglied an einem sensorgesteuerten Auslösesystem steht, das typischerweise durch einen Auslösemagneten, den sogenannten Crashmagneten, oder durch ein pyrotechnisches Auslöseglied, gebildet ist.

Die Verriegelungseinrichtung besteht typischerweise aus einer schwenkbar angelenkten, federvorgespannten Rastklinke mit Zahnsegmenten, auch Sperrklinke genannt und einer feststehenden Zahnleiste, einem Rastdorn oder dergleichen, wobei ein Verriegelungs-Element mit dem Überrollbügel und das andere fahrzeugfest verbunden ist.

Eine derartige Kassetten-Konstruktion eines Überrollbügelschutzsystems zeigt beispielsweise die DE 100 40 642 C1, eine Weiterbildung des Kassettensystems nach der DE 43 42 400 A1.

Es ist betrieblich nach einer Auslösung des Überrollbügels insbesondere zu Test-/Inspektionszwecken notwendig, das System manuell zu entriegeln und den Überrollbügel manuell in die Kassette gegen die Kraft der vorgespannten Antriebs-Druckfedern hineinzudrücken. Bei dem System nach der zitierten DE 43 42 400 C2 besitzt die Sperrklinke einen verlängerten Hebelarm, der es erlaubt, die Sperrklinke im ausgefahrenen Zustand des Überrollbügels manuell gegen die Kraft der vorspannenden Federn zu verschwenken, um so die Sperrklinke außer Wirkeingriff mit dem Rastdorn zu bringen und ein manuelles Einschieben des Überrollbügels zu ermöglichen. Das Problem dabei ist, daß beide Vorgänge gleichzeitig erfolgen müssen, d.h. eine Hand der Bedienungsperson verschwenkt die Sperrklinke und die andere Hand drückt den Überrollbügel in die Kassette. Dieses Eindrücken erfordert eine relativ hohe Kraft, da die starken Antriebs-Druckfedern dabei gespannt werden müssen.

Es ist zwar durch die DE 199 10 424 C1 bekannt, eine selbsthaltende Entriegelungs-Einrichtung bei Überrollbügel-Schutzsystemen vorzusehen, die nach einer manuellen Entriegelung der Sperrklinke diese selbsttätig im entriegelten Zustand hält, so daß der Überrollbügel mit beiden Händen in die Kassette eingeschoben werden kann. Bei Erreichen der Ausgangsstellung erfolgt dabei selbsttätig die Verriegelung. Diese bekannte Entriegelungs-Einrichtung ist jedoch sehr aufwändig, weil sie aus relativ vielen Bauteilen besteht, die sehr exakt aufeinander abgestimmt werden müssen.

Entsprechendes gilt für die selbsthaltende Entriegelung Einrichtung des eingangs bezeichneten Überrollschutzsystems nach der gattungsbildenden DE 100 42 420 A1, die zur Selbsthaltung einen manuell in Totpunktlage gebrachten Umlenkhebel besitzt, der durch geeignete, zusätzliche Mittel mittels Form- oder Reibschluß in dieser an sich labilen Gleichgewichtslage gehalten werden soll. Über ein komplexes Stößel-Stangensystem kann die Selbsthaltung abhängig von der Position des Überrollbügels aufgehoben werden.

Der Erfindung liegt die Aufgabe zugrunde, für das eingangs bezeichnete Überrollschutzsystem eine selbsthaltende Entriegelungs-Einrichtung vorzusehen, die nur sehr wenige zusätzliche Bauteile benötigt, und dabei sehr einfach aufgebaut ist.

Die Lösung dieser Aufgabe gelingt für ein Überrollschutzsystem für Kraftfahrzeuge gemäß Anspruch 1, mit einem Überrollbügel, der in einer fahrzeugfesten Führungseinheit geführt aufgenommen ist, und der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der AntriebsDruckfeder in eine obere, schützende verriegelte Stellung bringbar ist, und mit einer Verriegelungseinrichtung für Kraftfahrzeuge, mit einem Überrollbügel, der in einer fahrzeugfesten Führungseinheit geführt aufgenommen ist, und der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine obere, schützende verriegelte Stellung bringbar ist, und mit einer Verriegelungseinrichtung, bestehend aus zwei Verriegelungselementen in Form eines Zahnsegmentes und einer mittels mindestens einer Feder vorgespannten Sperrklinke, von denen das eine Verriegelungs-Element fahrzeugfest angeordnet und das andere Verriegelungs-Element mit dem Überrollbügel verbunden ist, wobei der Sperrklinke eine deren entriegelte Stellung selbsthaltende Einrichtung zugeordnet ist, einmal einen zweiarmigen Umlenkhebel aufweist, der an demselben Träger, an dem die Sperrklinke angelenkt ist, drehbar angelenkt ist, und zum anderen einen nach Art einer Kulissenführung ausgebildeten, einen abgekröpften End-Anschlag besitzenden Fortsatz der Sperrklinke einschließt, der in Wirkverbindung mit einem Hebelarm (Wirk-Hebelarm) des Umlenkhebels steht, derart, daß bei manueller Verschwenkung des Umlenkhebels die Sperrklinke unter Lösen des verriegelnden Wirkeingriffes mit dem Zahnsegment selbsthaltend verschwenkbar ist, gemäß der Erfindung dadurch, daß der Fortsatz der Sperrklinke hinsichtlich seiner Kulissenführung und dem End-Anschlag so ausgebildet ist, daß bei einem manuellen Wirkeingriff am anderen, längeren Hebelarm (Betätigungs-Hebelarm) der Umlenkhebel in eine durch den End-Anschlag begrenzte Über-Totpunkt-Stellung bringbar ist, und daß am Überrollbügel eine Steuernocke mit einer Steuerfläche derart angebracht ist, daß die Steuerfläche unmittelbar vor Erreichen der Ruhestellung beim Einschieben eines ausgefahrenen Überrollbügels in Wirkeingriff mit dem Betätigungs-Hebelarm des Umlenkhebels unter Verschwenken dieses Umlenkhebels vor seinen Totpunkt tritt.

Durch die erfindungsgemäße Maßnahme, den zweiarmigen Umlenkhebel in eine stabile Übertotpunkt-Lage zu bringen, ist mit einfachen und damit kostengünstigen Mitteln eine wirksame selbsthaltende Entriegelung der Sperrklinke möglich.

Der abgekröpfte End-Anschlag für den Wirk-Hebelarm des Umlenkhebels am Ende des Fortsatzes der Sperrklinke gewährleistet dabei eine definierte Positionierung der Übertotpunktlage.

Um mit einfachen Mitteln eine selbsttätige Aufhebung der Übertotpunkt-Blockierung des Umlenkhebels zu erreichen, ist eine Konstruktion vorgesehen, bei der am Überrollbügel eine Steuernocke mit einer Steuerfläche derart angebracht ist, daß die Steuerfläche unmittelbar vor Erreichen der Ruhestellung beim Einschieben eines ausgefahrenen Überrollbügels in Wirkeingriff mit dem Betätigungs-Hebelarm des Umlenkhebels unter Verschwenken dieses Umlenkhebels vor seinen Totpunkt tritt.

Die Steuernocke ist dabei zweckmäßig am Bügelkopf des Überrollbügels angebracht.

Um möglichst geringe Fertigungskosten für die Sperrklinke mit ihrem Fortsatz aufwenden zu müssen, sieht eine weitere Ausgestaltung vor, daß der Fortsatz der Sperrklinke mit seinem End-Anschlag einstückig an der Sperrklinke angeformt ist.

Um eine Übertotpunkt-Blockierung des Umlenkhebels auf möglichst geringem Bauraum zu erzielen, sieht eine Weiterbildung der Erfindung vor, daß der Fortsatz der Sperrklinke oberhalb des Wirkeingriffes der vorspannenden Federn gegenüber der Längsachse des Überrollbügels im spitzen Winkel geneigt seitlich abgebogen ist, sowie daß die Arme des Umlenkhebels einen stumpfen Winkel bilden.

Um einen geschmeidigen Wirkeingriff zwischen Steuerfläche und Betätigungs-Hebelarm zu gewährleisten, ist vorgesehen, daß der Betätigungs-Hebelarm des Umlenkhebels an seinem freien Ende eine Rolle aufweist.
Die Steuerfläche kann damit leicht über die Rolle gleiten.

Ein Ausführungsbeispiel der Erfindung wird nachfolgend anhand der Zeichnungen erläutert. Dabei zeigen:
- Fig. 1: eine teilweise geschnittene Vorderansicht einer Überrollbügeleinrichtung mit der erfindungsgemäßen selbsthaltenden Entriegelung im ausgefahrenen Zustand,
- Fig. 1 A: einen vergrößerten Ausschnitt aus Fig. 1 unter näherer Darstellung der selbsthaltenden Entriegelung,
- Fig. 2: die Vorderansicht nach Fig. 1 im eingefahrenen Zustand, und
- Fig. 3: einen vergrößerten Ausschnitt aus Fig. 2 unter näherer Darstellung der Übertotpunktlage im Figurenteil A, der Kräfteverteilung in dieser Lage im Figurenteil B, und einer Ausschnittdarstellung des Wirkangriffspunktes des Umlenkhebels an der Sperrklinke im Figurenteil C.

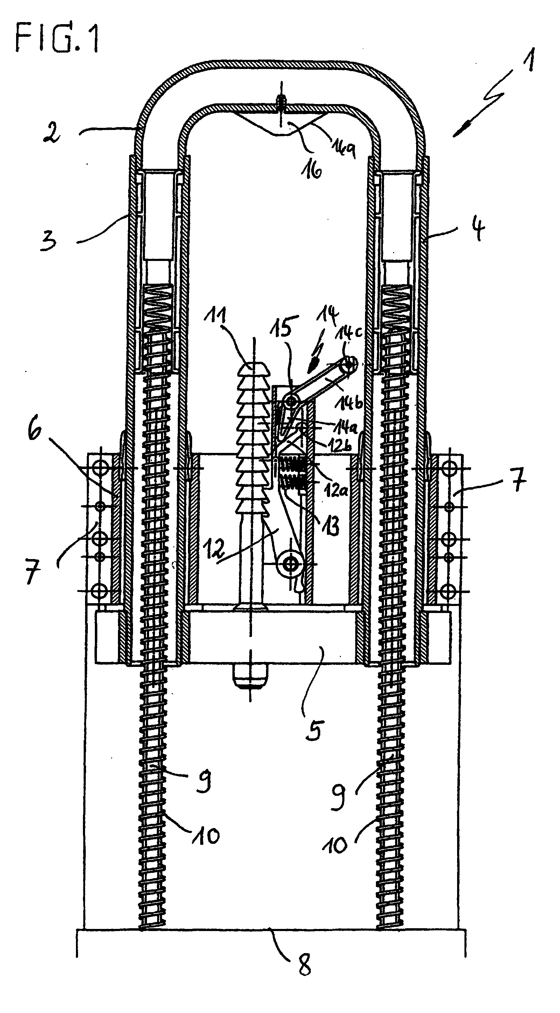

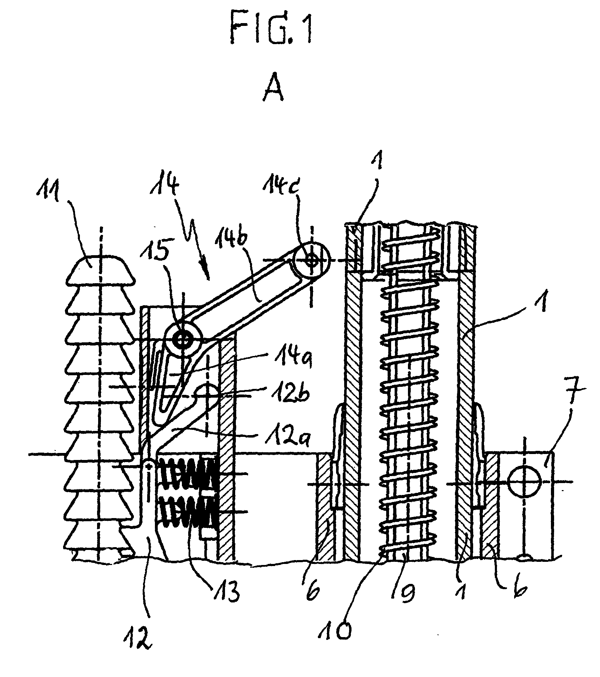

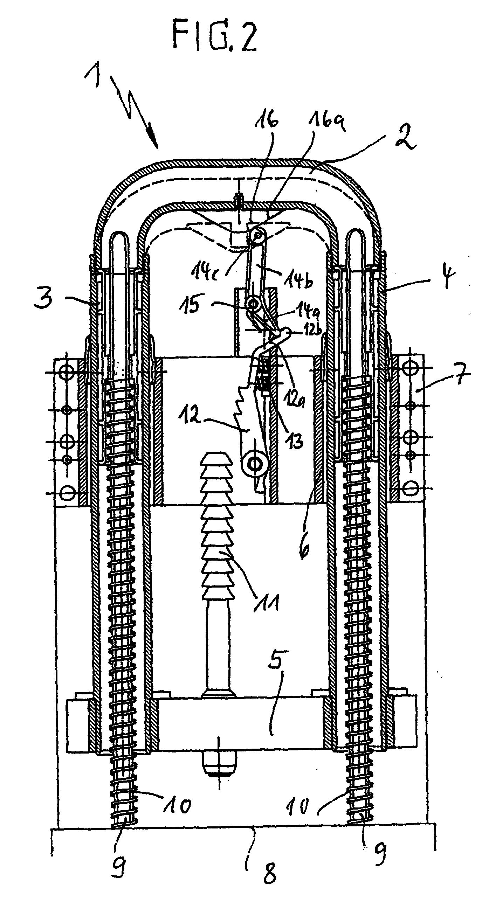

In den Figuren 1 und 2 ist ein Ausführungsbeispiel des erfindungsgemäßen Überrollbügelsystems dargestellt, mit dem ausgefahrenen Überrollbügel 1 in Fig. 1 und dem eingefahrenen Überrollbügel in Fig. 2.

Der Grundaufbau des dargestellten Überrollbügelsystems nach dem Kassettenprinzip ist bekannt, beispielsweise aus der vorne zitierten DE 43 42 400 C2 und der zugehörigen Weiterentwicklung nach der DE 43 42 400 A1.

Der Überrollbügel ist ist aus drei Rohren 2, 3, 4 zusammengesetzt. Dabei bildet den Basisschenkel des Überrollbügels 1 im wesentlichen ein gekrümmtes Rohr 2, auch Bügelkopf genannt, welches an seinen Enden mit zwei Schenkelrohren 3, 4 durch Schweißen oder andere geeignete Verbindungsarten starr verbunden ist.

Die Enden der Schenkelrohre 3, 4 sind über eine Traverse 5 miteinander verbunden.

Die Schenkelrohre 3, 4 sind in einem fahrzeugfesten Führungsblock 6 der Kassette geführt gehaltert. Die Traverse wird in U-förmigen, den Führungsblock aufnehmenden Seitenprofilen 7 der Kassette geführt.

Am Boden 8 der Kassette sind zwei Bolzen 9 befestigt, die jeweils eine Druckfeder 10 für ein Schnellausfahren des Überrollbügels 1 besitzen. Im eingefahrenen Zustand des Überrollbügels 1 (Fig. 2) sind diese Druckfedern vorgespannt. Um den vorgespannten Überrollbügel in dieser Lage halten zu können, ist eine der Einfachheit halber nicht dargestellte Haltevorrichtung mit einem sensorgesteuerten Auslösesystem vorgesehen, der im Fall eines drohenden Überschlages den Überrollbügel 1 freigibt, wodurch dieser in eine schützende obere Position ausgfahren wird (Fig. 1).

Damit diese schützende Position erhalten bleibt, muß der Überrollbügel in der ausgefahrenen Position verriegelt werden. Dazu dienen in bekannter Weise ein Rastdorn 11, der an der beweglichen Traverse 5 befestigt ist, und eine Sperrklinke 12, die drehbar und durch zwei Federn 13 vorgespannt im Führungsblock 6 angelenkt ist. Die Federn 13 drücken die Zähne der Sperrklinke 13 in Wirkeingriff mit den umlaufenden Rücksprüngen des mit dem Überrollbügel 1 befestigten Rastdornes 11 und verhindern so, daß der Rastdorn und damit auch der Überrollbügel unter Einwirkung einer Last nach unten gedrückt wird. Die ausgefahrene Stellung ist damit verriegelt. Die Vielzahl der Rücksprünge im Rastdorn 11 ermöglicht dabei eine Verriegelung auch dann, wenn der Überrollbügel 1 seine Endstellung nicht erreicht.

Es ist jedoch betrieblich nach einer Auslösung zu Testzwecken oder nach einer Fehlauslösung notwendig, das System manuell zu entriegeln und den Überrollbügel 1 per Hand in die Kassette hineinzudrücken. Bei dem oben beschriebenen System besitzt die Sperrklinke einen verlängerten Hebelarm, der es erlaubt, die Sperrklinke im ausgefahrenen Zustand des Überrollbügels manuell gegen die Kraft der vorspannenden Federn zu verschwenken, um so die Sperrklinke außer Wirkeingriff mit dem Rastdorn zu bringen und ein manuelles Einschieben des Überrollbügels zu ermöglichen. Das Problem dabei ist, daß beide Vorgänge gleichzeitig erfolgen müssen, d.h. eine Hand der Bedienungsperson verschwenkt die Sperrklinke und die andere Hand drückt den Überrollbügel in die Kassette. Dieses Eindrücken erfordert eine relativ hohe Kraft, da die starken Druckfedern 10 dabei gespannt werden müssen.

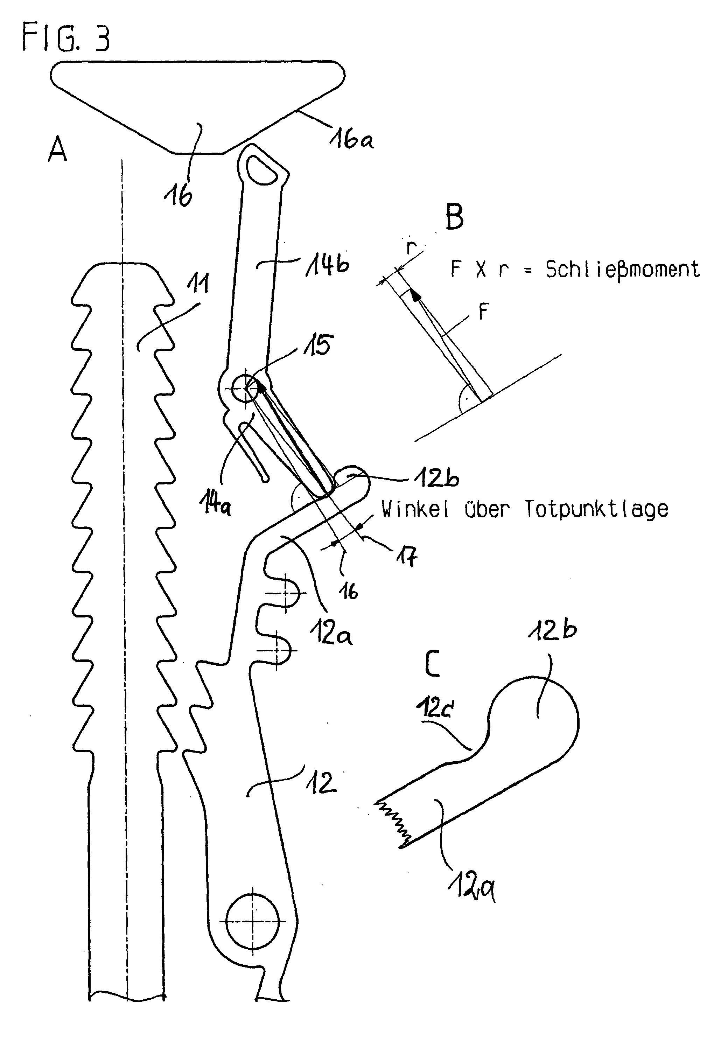

Um es zu ermöglichen, daß der ausgefahrene Überrollbügel mit beiden Händen eingeschoben werden kann, sieht die Erfindung eine Selbsthaltung der verschwenkten, d.h. entriegelten Sperrklinke 12 mittels eines abgewinkelten Umlenkhebels 14 vor, der ebenso wie die Sperrklinke 12 im Führungsblock um eine Achse 15 schwenkbar angelenkt ist. Dieser Umlenkhebel 14 besitzt, wie die Ausschnitt-Darstellung nach Fig. 1 A näher zeigt, einen unteren Hebelarm 14 a, dessen abgerundetes Ende nach Art einer Kulissenführung mit einem abgewinkelten Fortsatz 12 a der Sperrklinke 12 im Wirkeingriff steht. Der Umlenkhebel 14 besitzt ferner einen oberen, abgewinkelten Hebelarm 14 b, mit dem der Umlenkhebel manuell gegen den Uhrzeigersinn verschwenkt werden kann. Dabei gleitet das abgerundete Ende des unteren Hebelarms 14 a auf den Fortsatz 12 a und verschwenkt dabei die Sperrklinke 12 im Uhrzeigersinn, bis das Ende am abgekröpften Ende 12 b des Fortsatzes zum Anschlag kommt. In dieser Lage ist der Umlenkhebel 14 über seinen Totpunkt hinaus verschwenkt, so daß die Federn 13 ihn über den Fortsatz 12 a der Sperrklinke nicht mehr rückverschwenken können. Der Umlenkhebel ist daher in dieser Lage blockiert und bedarf keiner manuellen Betätigung mehr. Nunmehr sind beide Hände für das Einschieben des Überrollbügels frei. Diese entriegelnde Stellung des Umlenkhebels ist in der Fig. 2 dargestellt, die eine eingefahrene Position des Überrollbügels kurz vor seiner Ruheposition, die gestrichelt dargestellt ist, zeigt, wobei Einzelheiten aus der Ausschnitt-Darstellung nach Fig. 3 hervorgehen. Die Figurenteile A und B zeigen die Kräfteverteilung in der Über-Totpunktlage. Die Linie 16 markiert die exakte Totpunktlage. Der Hebelarm 14 a steht dann im Winkel von 90° auf der Kulissenbahn des Klinkenfortsatzes 12 a. Die Linie 17 markiert die erreichte Über-Totpunktlage, d.h. der Winkel zwischen den Linien 16 und 17 ist der Winkel über der Totpunktlage.

Wie der Figurenteil B verdeutlicht, entsteht dabei ein Schließmoment F x r für den Umlenkhebel, wobei F von der Vorspannkraft der Federn 13 (Fig. 2) bestimmt ist.

Als Sicherheit für eine ungünstige Toleranzlage der montierten Bauteile ist, wie der Figurenteil C zeigt, am Klinkenfortsatz 12 a unmittelbar vor dem abgekröpften Ende 12 b eine Vertiefung 12 c für einen sicheren Sitz des Hebelarmes 14 a ausgeformt.

Um sicherzustellen, daß beim Erreichen der Ruheposition die Sperrklinke selbsttätig wieder in die verriegelnde Stellung gelangt, ist am Bügelkopf 2 eine Steuernocke 16 mit einer linear ansteigenden Steuerfläche 16 a vorgesehen, die in der dargestellten Position im Wirkeingriff mit einer am oberen Ende des Hebelarmes angebrachten Rolle 14 c gelangt. Durch diesen Wirkeingriff wird der Umlenkhebel im Uhrzeigersinn verschwenkt, wodurch der untere Hebelarm 14 a außer Eingriff mit dem Fortsatz 12 a kommt. Dadurch wird die Blockierung der Sperrklinke aufgehoben und die Federn 13 können die Sperrklinke 12 wieder in verriegelnden Wirkeingriff mit dem Rastdorn 11 bringen.

## Patentansprüche

1. Überrollschutzsystem für Kraftfahrzeuge, mit einem Überrollbügel (1), der in einer fahrzeugfesten Führungseinheit (6, 7) geführt aufgenommen ist, und der im Normalzustand gegen die Kraft von mindestens einer vorgespannten Antriebs-Druckfeder (10) durch eine Haltevorrichtung in einer unteren, eingefahrenen Ruhelage haltbar ist, und unter Lösen der Haltevorrichtung durch die Federkraft der Antriebs-Druckfeder in eine obere, schützende verriegelte Stellung bringbar ist, und mit einer Verriegelungseinrichtung, bestehend aus zwei Verriegelungselementen in Form eines Zahnsegmentes (11) und einer mittels mindestens einer Feder (13) vorgespannten Sperrklinke (12), von denen das eine Verriegelungs-Element fahrzeugfest angeordnet und das andere Verriegelungs-Element mit dem Überrollbügel (1) verbunden ist, wobei der Sperrklinke (12) eine deren entriegelte Stellung selbsthaltende Einrichtung zugeordnet ist, die einmal einen zweiarmigen Umlenkhebel (14) aufweist, der an demselben Träger (6), an dem die Sperrklinke (12) angelenkt ist, drehbar angelenkt ist, und zum anderen einen nach Art einer Kulissenführung ausgebildeten, einen abgekröpften End-Anschlag (12 b) besitzenden Fortsatz (12 a) der Sperrklinke (12) einschließt, der in Wirkverbindung mit einem Wirk-Hebelarm (14 a) des Umlenkhebels (14) steht, derart, daß bei manueller Verschwenkung des Umlenkhebels (14) die Sperrklinke (12) unter Lösen des verriegelnden Wirkeingriffes mit dem Zahnsegment (11) selbsthaltend verschwenkbar ist, **dadurch gekennzeichnet, daß** der Fortsatz (12 a) der Sperrklinke (12) hinsichtlich seiner Kulissenführung und dem End-Anschlag (12 b) so ausgebildet ist, daß bei einem manuellen Wirkeingriff am anderen, längeren Betätigungs-Hebelarm (14 b) der Umlenkhebel (14) in eine durch den End-Anschlag (12 b) begrenzte Über-Totpunkt-Stellung bringbar ist, und daß am Überrollbügel (1) eine Steuernocke (16) mit einer Steuerfläche (16 a) derart angebracht ist, daß die Steuerfläche (16 a) unmittelbar vor Erreichen der Ruhestellung beim Einschieben eines ausgefahrenen Überrollbügels in Wirkeingriff mit dem Betätigungs-Hebelarm (14 b) des Umlenkhebels (14) unter Verschwenken dieses Umlenkhebels vor seinen Totpunkt tritt.

2. Überrollschutzsystem nach Anspruch 1, **dadurch gekennzeichnet, daß** der Fortsatz (12 a) der Sperrklinke (12) mit seinem End-Anschlag (12 b) einstückig an der Sperrklinke (12) angeformt ist.

3. Überrollschutzsystem nach Anspruch 1 oder 2, **dadurch gekennzeichnet, daß** der Fortsatz (12 a) der Sperrklinke (12) oberhalb des Wirkeingriffes der vorspannenden Federn (13) gegenüber der Längsachse des Überrollbügels im spitzen Winkel geneigt seitlich abgebogen ist.

4. Überrollschutzsystem nach einem der Ansprüche 1 bis 3, **dadurch gekennzeichnet, daß** die Arme (14 a, 14 b) des Umlenkhebels (14) einen stumpfen Winkel bilden.

5. Überrollschutzsystem nach einem der Ansprüche 1 bis 4, **dadurch gekennzeichnet, daß** die Steuernocke (16) am Bügelkopf (2) angebracht ist.

6. Überrollschutzsystem nach einem der Ansprüche 1 bis 5, **dadurch gekennzeichnet, daß** der Betätigungs-Hebelarm (14 b) des Umlenkhebels (14) an seinem freien Ende eine Rolle (14 c) aufweist.

7. Überrollschutzsystem nach einem der Ansprüche 1 bis 6, **dadurch gekennzeichnet, daß** der Fortsatz (12 a) der Sperrklinke (12) unmittelbar vor dem End-Anschlag (12 b) eine muldenförmige Vertiefung (12 c) für den Wirkeingriff des Wirk-Hebelarmes (14 a) aufweist.

## Claims

1. Rollover protection system for motor vehicles, having a roll bar (1) which is received and guided in a guide unit (6, 7) fixed to the vehicle and which, in the normal state, can be held by a retaining device in a lower, retracted, resting position against the force of at least one pre-loaded driving compression spring (10) and, with the release of the retaining device, can be brought by the spring force of the driving compression spring into an upper, protecting, locked position, and having a locking device consisting of two locking elements in the form of a toothed segment (11) and a pawl (12) which is biased by means of at least one spring (13), the one locking element being fixed to the vehicle and the other locking element being connected to the roll bar (1), the pawl (12) being associated with a mechanism that self-arrests the unlocked position of the pawl (12) and which, on the one hand, has a two-armed reversing lever (14) which is rotatably coupled to the same support (6) as that to which the pawl (12) is coupled, and, on the other hand, includes a continuation (12a) of the pawl (12), which continuation (12a) is constructed in the manner of a crank guide, has an offset end stop (12b) and is in operative connection with an effective lever arm (14a) of the reversing lever (14) in such a manner that, when the reversing lever (14) is manually pivoted, the pawl (12) can be pivoted in a self-arresting manner as the locking operative engagement with the toothed segment (11) is disengaged, **characterised in that** the continuation (12a) of the pawl (12) is so constructed with regard to its crank guide and the end stop (12b) that when the other, longer operating lever arm (14b) is manually operatively engaged the reversing lever (14) can be brought into a beyond-dead-centre position which is limited by the end stop (12b), and a control cam (16) having a control surface (16a) is mounted on the roll bar (1) in such a manner that, immediately before the resting position is reached when an extended roll bar is being pushed in, the control surface (16a) comes into operative engagement with the operating lever arm (14b) of the reversing lever (14), pivoting that reversing lever to before its dead centre.

2. Rollover protection system according to claim 1, **characterised in that** the continuation (12a) of the pawl (12) together with its end stop (12b) is integrally formed on the pawl (12).

3. Rollover protection system according to claim 1 or 2, **characterised in that** the continuation (12a) of the pawl (12) is bent laterally at an acute angle to the longitudinal axis of the roll bar, above the operative engagement of the biasing springs (13).

4. Rollover protection system according to any one of claims 1 to 3, **characterised in that** the arms (14a, 14b) of the reversing lever (14) form an obtuse angle.

5. Rollover protection system according to any one of claims 1 to 4, **characterised in that** the control cam (16) is mounted on the bar head (2).

6. Rollover protection system according to any one of claims 1 to 5, **characterised in that** the operating lever arm (14b) of the reversing lever (14) has a roller (14c) at its free end.

7. Rollover protection system according to any one of claims 1 to 6, **characterised in that** the continuation (12a) of the pawl (12) has, directly in front of the end stop (12b), a trough-shaped depression (12c) for operative engagement of the effective lever arm (14a).

## Revendications

1. Système de protection en cas de retournement pour véhicules automobiles avec un arceau de sécurité (1) qui est logé de manière guidée dans une unité de guidage (6, 7) solidaire du véhicule et qui, dans l'état normal, peut être maintenu, par un dispositif de maintien et contre la force d'au moins un ressort de compression d'entraînement (10) mis en précontrainte, dans une position de repos inférieure rentrée et peut, par le déverrouillage du dispositif de maintien, être amené par la force du ressort de compression d'entraînement dans une position supérieure de protection verrouillée, et avec un dispositif de verrouillage se composant de deux éléments de verrouillage sous la forme d'un segment denté (11) et d'un cliquet de blocage (12) mis en contrainte à l'aide d'au moins un ressort (13) dont l'un des éléments de verrouillage est disposé en solidarité avec le véhicule et l'autre élément de verrouillage est relié à l'arceau de sécurité (1), un dispositif assurant l'auto-maintien de sa position de déverrouillage étant associé au cliquet de blocage (12), lequel dispositif comprend, d'une part, un levier de renvoi à deux bras (14), qui est articulé de manière tournante sur le support même (6) sur lequel est articulé le cliquet de blocage (12), et inclut, d'autre part, un prolongement (12a) du cliquet de blocage (12) qui est configuré à la manière d'un guide à coulisse et qui comprend une butée d'extrémité coudée (12b), lequel prolongement est en liaison active avec un bras de levier actif (14a) du levier de renvoi (14), et ceci de telle façon que, par un pivotement manuel du levier de renvoi (14), le cliquet de blocage (12) peut pivoter en auto-maintien en annulant le verrouillage de la prise active avec le segment denté (11), **caractérisé en ce que**, en ce qui concerne son guide à coulisse et la butée d'extrémité (12b), le prolongement (12a) du cliquet de blocage (12) est configuré de telle façon que, avec une action manuelle sur l'autre bras de levier d'actionnement plus long (14b), le levier de renvoi (14) peut être amené dans une position allant au-delà du point mort qui est limitée par la butée d'extrémité (12b) et **en ce qu'**une came de commande (16) avec une surface de commande (16a) est fixée de telle façon sur l'arceau de sécurité (1) que, juste avant que la position de repos soit atteinte lors de l'introduction d'un arceau de sécurité sorti, la surface de commande (16a) arrive en prise active avec le bras de levier d'actionnement (14b) du levier de renvoi (14) en faisant pivoter ce levier de renvoi devant son point mort.

2. Système de protection en cas de retournement selon la revendication 1, **caractérisé en ce que** le prolongement (12a) du cliquet de blocage (12) avec sa butée d'extrémité (12b) est formé d'une seule pièce sur le cliquet de blocage (12).

3. Système de protection en cas de retournement selon l'une des revendications 1 et 2, **caractérisé en ce que**, au-dessus du point de contact actif des ressorts mis en précontrainte (13), le prolongement (12a) du cliquet de blocage (12) est recourbé sur le côté en étant incliné avec un angle aigu par rapport à l'axe longitudinal de l'arceau de sécurité.

4. Système de protection en cas de retournement selon l'une des revendications 1 à 3, **caractérisé en ce que** les bras (14a, 14b) du levier de renvoi (14) forment un angle obtus.

5. Système de protection en cas de retournement selon l'une des revendications 1 à 4, **caractérisé en ce que** la came de commande (16) est disposée sur la tête de l'étrier (2).

6. Système de protection en cas de retournement selon l'une des revendications 1 à 5, **caractérisé en ce que** le bras de levier d'actionnement (14b) du levier de renvoi (14) est muni d'un rouleau (14c) à son extrémité libre.

7. Système de protection en cas de retournement selon l'une quelconque des revendications 1 à 6, **caractérisé en ce que** le prolongement (12a) du cliquet de blocage (12) comprend, directement devant la butée d'extrémité (12b), un renfoncement en forme de cavité (12c) pour assurer la prise active du bras de levier actif (14a).
